# EUROPEAN PATENT SPECIFICATION

(11) **EP 2 084 450 B1**
(45) Date of publication and mention of the grant of the patent: **23.03.2022**
(21) Application number: 07835443.8
(22) Date of filing: 16.11.2007
(51) Int. Cl.: F16L 55/24, A01B 59/06, E02F 9/22, E02F 3/36, E02F 3/627

(54) **WORK EQUIPMENT WITH HOLDING MEANS FOR A HYDRAULIC COUPLING**
ARBEITSMITTEL MIT HALTEMITTEL FÜR EINE HYDRAULISCHE KUPPLUNG
ÉQUIPMENT DE TRAVAIL AVEC MOYEN DE RETENUE POUR COUPLAGE HYDRAULIQUE

(30) Priority: 01.12.2006 SE 0602577
(43) Date of publication of application: 05.08.2009
(73) Proprietor: Nordhydraulic AB, 872 24 Kramfors (SE)
(72) Inventor: LUNDGREN, Bertil, 872 96 Bjärtrå (SE)
(74) Representative: Bartels und Partner, Patentanwälte
(86) International application number: PCT/SE2007/050860
(87) International publication number: WO 2008/066478

(56) References cited:
- EP-A1- 0 522 493
- JP-A- 08 049 253
- JP-A- 2007 195 447
- US-A- 5 232 330
- US-B1- 6 899 509

## Description

### TECHNICAL AREA

The present invention relates to a work equipment with a holding means for holding and protecting a movable connector part of a hydraulic system with the features of the preamble of claim 1.

### BACKGROUND OF THE INVENTION

Hydraulic systems are used in a wide variety of applications. One application relates to work vehicles, such as wheel loaders or tractors, to which a work equipment, such as front loader, a plough, a bucket or similar, may be connected. Apart from being mechanically connected to the work vehicle, the work equipment also needs to be hydraulically connected. The work equipment includes a hydraulic system for controlling its functions. This hydraulic system is connected to and driven by the hydraulic system of the work vehicle.

The two hydraulic systems are interconnected by means of connector parts. The connectors are preferably of a multi coupling type, in which a plurality of hydraulic connections may be connected in one single operation. A multi coupling comprises a fixed part on the vehicle and a movable part on the work equipment. It is however still common to connect each and every hydraulic connection individually, usually by means of so called quick couplings, one for every connection. In this application, a "fixed connector part" denotes the connector on the work vehicle regardless of if it is of a multi coupling type or of comprises a plurality of individual couplings. Accordingly, application a "movable connector part" denotes the connector on the work equipment regardless of if it is of a multi coupling type or if it comprises a plurality of individual couplings.

It is important for the well function of these connectors that they are kept clean, both during working operations, but also in between working operations. The work vehicle often operates in harsh environments, in which the connector parts are exposed to dirt. Thus, there exists a need for an arrangement for protecting the connector parts of the hydraulic systems. As the work vehicle sometimes is operated without work equipment, the protective arrangement needs to adaptable, such that it also protects the fixed connector part and the movable connector part individually when they are disconnected from each other.

Conventionally, the fixed connector part has been provided with a pivotable lid, which is arranged to cover the fixed connector part when no movable connector part is connected to it. To connect the movable connector part, the cover is folded open to make room for the movable connector part. This conventional type of cover protects the fixed connector part satisfactory when it is left disconnected. However, other than that it has a number of disadvantages. Firstly, the cover collects dirt during operation as the lower protective surface of it is left exposed to the environment during normal operation. Thus, the cover has to be cleaned each time it is to be remounted on the fixed connector part. Additionally, no protection is provided for the movable connector part when it is disconnected from the fixed connector part. Normally, the work equipment with the exposed movable connector part is stored in a rather dirty environment, often outside. Thus, it is not uncommon that the movable connector part needs to be cleaned before it is connected to the fixed connector part.

US 5 232 330 describes a work equipment with a holding means for protecting a movable connector part of a hydraulic system on the work equipment, which movable connector part is connectable to a fixed connector part of a hydraulic system of a work vehicle, the holding means having a contact surface being adapted to mate with the movable connector part such that its hydraulic connections are protected and unexposed when it is placed in the holding means.

### BRIEF DESCRIPTION OF THE INVENTION

An aim of the present invention is to provide an improved arrangement for keeping the connector parts clean.

This is achieved according to the present invention by the work equipment of claim 1. Preferable embodiments of the present invention are indicated in the dependent claims.

According to a main aspect, the invention relates to a work equipment with a holding means for protecting a movable connector part of a hydraulic system on a work equipment, which movable connector part is connectable to a fixed connector part of a hydraulic system on a work vehicle, the holding means having a contact surface being adapted to fit tightly on the movable connector part such that its hydraulic connections are protected and unexposed when the movable connector part is placed in the holding means. The holding means is fixedly arranged on a work equipment, such that the contact surface of the holding means is accessible for protective connection of the movable connector part.

An advantage of the present invention is that the movable connector part is kept clean in between operations, such that it does not have to be cleaned before use.

Further, a second advantage of the invention is that thanks to the holding means the movable connector part of the work equipment is protected from impact as long as it is parked in the holding means. In prior art where there was no provision for protecting the movable connector part when disconnected from the fixed connector part there was always a risk that it might be damaged in one way or another. This risk is clearly minimized with the work equipment with the holding means according to the invention.

### SHORT DESCRIPTION OF THE DRAWINGS

In the following detailed description of the invention, reference will be made to the accompanying drawings, of which:
- Fig. 1: shows a work vehicle provided with a fixed connector part, wherein a work equipment with a movable multi coupling part is arranged on the work vehicle;
- Fig. 2: shows a detailed view of the fixed connector part of Fig. 1;
- Fig. 3: shows a work vehicle with a disconnected work equipment;
- Fig. 4: shows a detailed view of the fixed connector part of Fig. 3 provided with a cover according to an embodiment of the invention;
- Fig 5: shows a detailed view of the movable connector part of Fig. 3, parked in a holding means according to the invention;
- Fig. 6: shows the holding means in detail;
- Fig. 7: shows the holding means and three sets of connectable fittings;
- Fig. 8: shows the movable connector part parked in the holding means;
- Fig. 9: shows a movable connector part in form of 4 individual hydraulic couplings and an electric connector parked in the holding means;
- Fig 10: shows a movable connector part in form of 2 individual hydraulic couplings and an electric connector parked in the holding means; and
- Fig. 11: shows a cover arranged on the holding means.

### DETAILED DESCRIPTION OF THE INVENTION

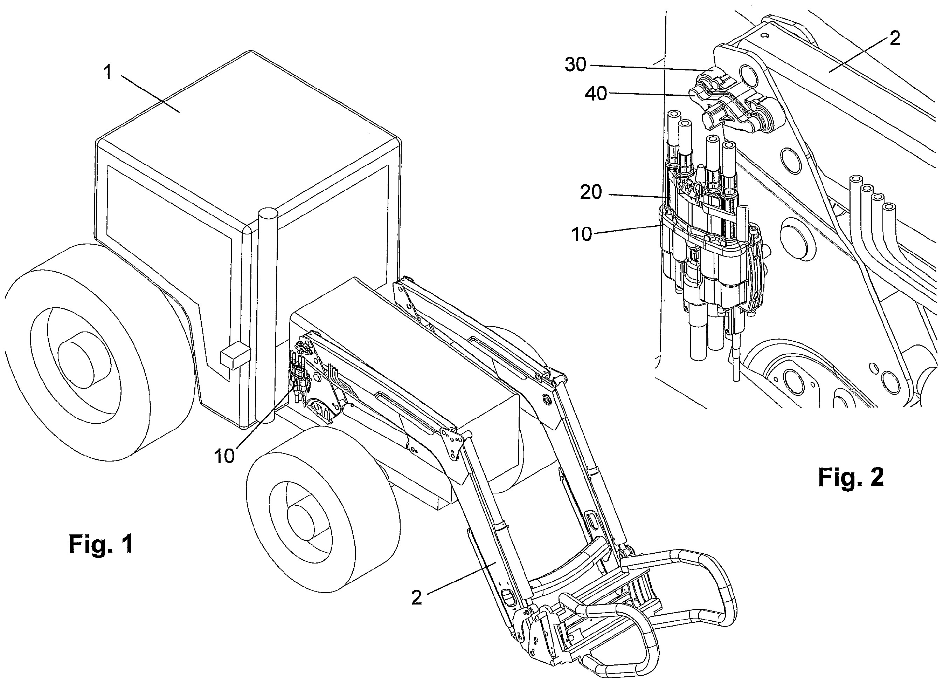

Fig. 1 shows a schematic view of a work vehicle 1, i.e. a tractor, provided with a conventional hydraulic system comprising a hydraulic pump, a tank with hydraulic fluid and a number of conduits, connections and valves. The hydraulic system comprises a fixed connector part 10, which is adapted to be connected to a movable connector part of a hydraulic system of a work equipment 2 to be used on the work vehicle 1. In Figs. 1-5 the movable connector part is represented by a movable multi coupling part 20.

Often, a work vehicle 1 is used for a number of different work tasks involving different work equipments 2. In the figures, the work equipment 2 is exemplified by a front loader unit, which is releasably attached to the work vehicle 1. In addition to the movable connector part 20, the front loader is provided with a movable hydraulic system comprising connections, conduits and pistons for lifting the loader and tilting the bucket. Generally, different types of equipments are adapted to be releasably attached to the work vehicle 1. Hence, the hydraulic connection unit of the work equipments 2, i.e. the movable connector part, must be adapted to be connected to or disconnected from the fixed connector part 10 of the hydraulic system on the work vehicle 1. Additionally, different tools may be connected to the work equipment 2. The tools generally also include hydraulic systems, which systems need to be connected to the hydraulic system of the work vehicle, via the hydraulic system of the work equipment 2. These connections might or might not be of the same type as the connections between the work equipment 2 and the work vehicle 1. For the sake of simplicity, only the connection between the work equipment 2 and the work vehicle 1 is described in this application. The invention may however also be used at the connection between the work equipment 2 and the tool.

Figs. 1-2 show the work vehicle 1 when the work equipment 2 is arranged on it. In this state, the movable multi coupling part 20 is connected to the fixed connector part 10, and a cover 40 is arranged to protect a holding means 30, which is arranged on the work equipment 2.

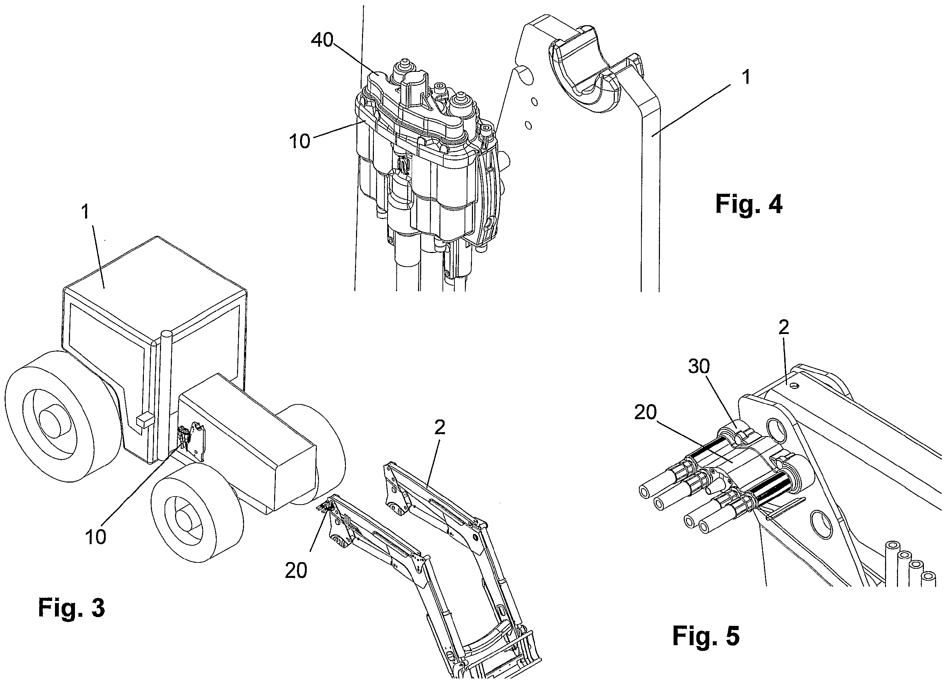

In Figs. 3-5, the work equipment 2 is disconnected from the work vehicle 1. In this state, the movable multi coupling part 20 is parked in the holding means 30, and the cover 40 is instead arranged on the fixed connector part 10 in order to protect it.

The main aspect of the invention concerns the holding means 30 or "parking slot", which is adapted to be arranged on the work equipment 2 on a suitable location where it does not interfere with the function of the work equipment. The holding means 30 is designed such that it mates with the movable multi coupling part 20. Thus, it resembles the fixed connector part 10 and comprises a contact surface 32 arranged to correspond to and co-act with the connection surface of the movable multi coupling part 20, in order to protect the connection surface of the movable multi coupling part when attached to the holding means 30. The holding means 30 in the shown embodiment is provided with a central bar 33 corresponding to a bar of the embodied fixed hydraulic connection part 10. The holding means 30 is further provided with a circumferential rim 31, inside which the movable multi coupling part 20 fits tightly, such that it is efficiently held at place without any possibility to rotate. Preferably, the rim 31 also defines the outer border of the contact surface 32. Thus, the rim functions as a protective limit, keeping dirt away from the contact surface.

When the work equipment 2 is not to be used any more, the movable multi coupling part 20 is disconnected from the fixed connector part 10 on the work vehicle and inserted into the holding means 30 in which it fits tightly and remains fixed. The movable multi coupling part 20 is thus kept out of the way and is at the same time protected from the environment, such that dirt, debris, ice, snow etc. is kept away from its connection surface. Conventionally the connection part of the work equipments have been left exposed to the environment, which of course may lead to all kinds of problems, including total failure of the connector part due to impact with neighboring objects, and heavy soiling of both the connector part and the environment due to spillage of hydraulic fluid.

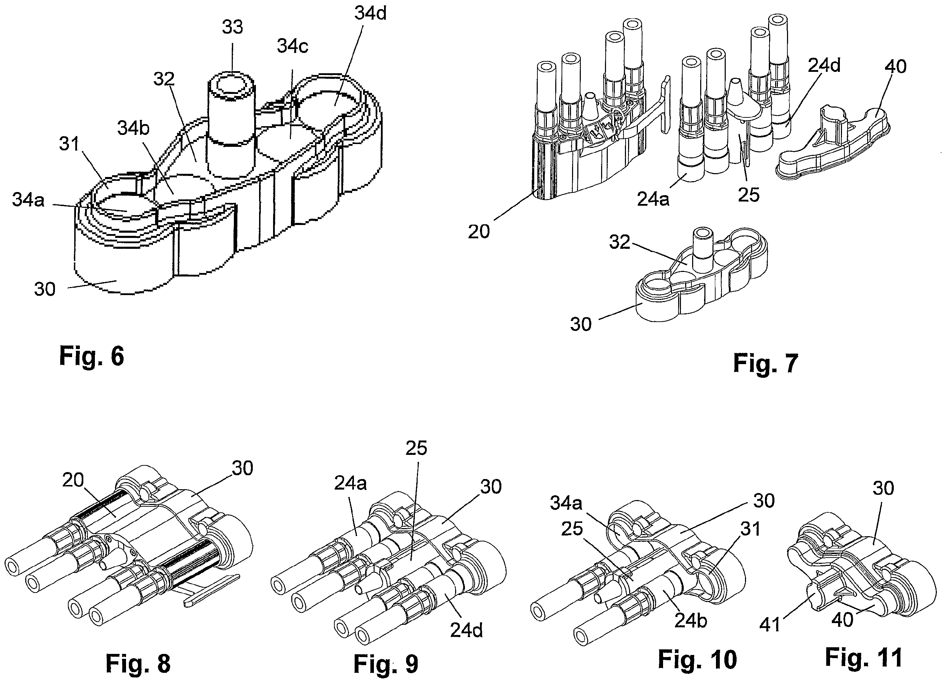

As indicated above, not all work equipments 2 are provided with a movable connector part of a multi coupling type. Therefore, the holding means 30 according to the invention is also adapted to receiving conventional hydraulic quick couplings. Openings 34a-d are arranged in the holding means 30, which are dimensioned to house individual quick couplings 24a-d, see e.g. Fig. 9 or 10. Hence, if the work equipment 2 is furnished with individual quick couplings 24a-d instead of a movable multi coupling part 20, these may be individually housed in these openings 34a-d of the holding means 30. Often, an electric connection is integrated in the fixed connector part for supplying the work equipment with electricity. Therefore, the holding means is provided with a dummy 33 arranged for attachment of such an electric connection of the work equipment.

In the shown embodiment, the electric connection is covered by a housing 25 which fits on the central dummy 33.

Consequently, a holding means 30 is advantageously arranged on all work equipments 2 that include a hydraulic system, regardless of the type of connection the hydraulic system of the work equipment 2 is provided with.

A second protecting means, in form of a cover 40, is provided in accordance with the present invention on the one hand for protecting the fixed connector part 10 when the movable connector 20, 24a-d part is not connected to it, and on the other for protecting the holding means 30 when the movable connector part is connected to the fixed connector part 10. The cover 40 is arranged as a lid with a lower surface that corresponds to the lower surface of the movable connector part 20, such that it fits the upper surface of the fixed connector part 10 and the upper surface of the holding means 30. The cover 40 may further be arranged with a central sleeve which protrudes through an opening in the cover and is connected to a knob 41 for turning the sleeve around its longitudinal axis. The sleeve may have the same configuration as the sleeve of the movable connector part 20, which enables the sleeve to be attached to the central bar 13 of the fixed connector part 10 in order to protect the hydraulic connections of the fixed connector part 10 when it is not in use. On the other hand, when the hydraulic system of the equipment is connected to the hydraulic system of the work vehicle, the cover is attached to the holding means 30 in order to protect the holding means 30 from dirt and debris. Thus, the holding means 30 and the cover 40 provides a full protection of the hydraulic connection parts of the present invention both during use and when parked.

As the cover is intended to be transferred between the fixed connector part and the holding means it may not fixed to either of these. However, it may preferably be attached to the work vehicle by means of a strap or similar. This is conceivable as the cover 40 is only attached to the holding means 30 when the work equipment with the holding means is attached to the work vehicle 1. When the work equipment 2 is disconnected from the work vehicle 1 the movable connector part 20 is placed in the holding means 30 and the cover 40 is placed on the fixed connector part 10. It is of course possible within the scope of the claims to use two individual covers, one for the fixed connector part 10 and for the holding means 30, but for such an embodiment the covers need to be arranged such that they do not collect dirt when they are disconnected.

In the shown embodiment, the holding means and the cover are designed to fit a special embodiment of a movable and a fixed connector part, respectively. As can be readily understood from the above the present invention may however be designed in many ways without departing from the scope of protection as defined by the patent claims. A general idea is that the holding means and the cover should be designed to fit the movable and the fixed connector part of the hydraulic system where it is to be implemented. It is thereby to be understood that the embodiments described above and shown in the drawings are to be regarded as non-limiting examples.

## Claims

1. Work equipment (2) with a holding means (30) for protecting a movable connector part (20; 24a-d) of a hydraulic system on the work equipment (2), which movable connector part (20; 24a-d) is connectable to a fixed connector part (10) of a hydraulic system of a work vehicle (1), the holding means (30) having a contact surface (32) being adapted to mate with the movable connector part (20; 24a-d) such that its hydraulic connections are protected and unexposed when it is placed in the holding means (30), **characterized in that** the holding means (30) is fixedly arranged on the work equipment (2), such that said contact surface (32) of the holding means (30) is accessible for protective connection of the movable connector part (20; 24a-d).

2. Work equipment (2) according to claim 1, **characterized in that** it is adapted to house a movable connector part (20; 24a-d) regardless of if the movable connector part (20; 24a-d) is a movable multi coupling part (20) or if it comprises a plurality of individual hydraulic couplings (24a-d).

3. Work equipment (2) according to claim 2, **characterized in** openings (34a-d) arranged on the contact surface (32) of the holding means (30), which openings (34a-d) are adapted to house individual hydraulic couplings (24a-d).

4. Work equipment (2) according to claim 3, **characterized in** an electric connector dummy (33) arranged for attachment of an electric connection (25) of the work equipment (2).

5. Work equipment (2) according to any of the preceding claims, **characterized in** a circumferential rim (31) defining the border of the contact surface (32), wherein a movable multi coupling part (20) fits tightly inside this rim (31).

6. Work equipment (2) according to any of the preceding claims, **characterized in that** it further includes a cover (40), which is adapted to fit and protect:
- the contact surface (32) of the holding means (30), when the movable connector part (20, 24a-d) is connected to the fixed connector part (10); and
- the fixed connector part (10), when the movable connector part (20, 24a-d) is disconnected from the fixed connector part (10) and placed in the holding means (30).

## Patentansprüche

1. Arbeitsmittel (2) mit einem Haltemittel (30) zum Schutz eines beweglichen Verbindungsteils (20; 24a-d) eines Hydrauliksystems am Arbeitsmittel (2), wobei das bewegliche Verbindungsteil (20; 24a-d) mit einem festen Verbindungsteil (10) eines Hydrauliksystems eines Arbeitsfahrzeugs (1) verbindbar ist, wobei das Haltemittel (30) eine Kontaktfläche (32) aufweist, die ausgelegt ist mit dem beweglichen Verbindungsteil (20; 24a-d) derart zusammenzupassen, dass seine Hydraulikverbinder geschützt und nicht freigelegt sind, wenn diese in dem Haltemittel (30) angeordnet sind, **dadurch gekennzeichnet, dass** das Haltemittel (30) fest am Arbeitsmittel (2) angebracht ist, so dass die Kontaktfläche (32) des Haltemittels (30) für eine Schutzverbindung des beweglichen Verbindungsteils (20; 24a-d) zugänglich ist.

2. Arbeitsmittel (2) nach Anspruch 1, **dadurch gekennzeichnet, dass** es ausgelegt ist, ein bewegliches Verbindungsteil (20; 24a-d) aufzunehmen, unabhängig davon, ob das bewegliche Verbindungsteil (20; 24a-d) ein bewegliches Mehrfachkupplungsteil (20) ist oder ob es eine Vielzahl von einzelnen Hydraulikkupplungen (24a-d) aufweist.

3. Arbeitsmittel (2) nach Anspruch 2, **gekennzeichnet durch** an der Kontaktfläche (32) des Haltemittels (30) angeordnete Öffnungen (34a-d), die ausgelegt sind, einzelne Hydraulikkupplungen (24a-d) aufzunehmen.

4. Arbeitsmittel (2) nach Anspruch 3, **gekennzeichnet durch** einen elektrischen Blindverbinder (33), der zur Befestigung eines elektrischen Verbinders (25) des Arbeitsmittels (2) vorgesehen ist.

5. Arbeitsmittel (2) nach einem der vorhergehenden Ansprüche, **gekennzeichnet durch** einen umlaufenden Rand (31), der die Einfassung der Kontaktfläche (32) vorgibt, wobei ein bewegliches Mehrfachkupplungsteil (20) genau in diesen Rand (31) passt.

6. Arbeitsmittel (2) nach einem der vorhergehenden Ansprüche, **dadurch gekennzeichnet, dass** es außerdem eine Abdeckung (40) aufweist, die zum passenden Anbringen und zum Schutz eingerichtet ist, für
- die Kontaktfläche (32) des Haltemittels (30), wenn das bewegliche Verbindungsteil (20, 24a-d) mit dem festen Verbindungsteil (10) verbunden ist; und
- das feste Verbindungsteil (10), wenn das bewegliche Verbindungsteil (20, 24a-d) vom festen Verbindungsteil (10) getrennt und in das Haltemittel (30) eingesetzt ist.

## Revendications

1. Equipement (2) de travail ayant un moyen (30) de retenue pour protéger une partie (20 ; 24a-d) mobile de connecteur d'un système hydraulique sur l'équipement (2) de travail, laquelle partie (20 ; 24a-d) mobile de connecteur peut être connectée à une partie (10) fixe de connecteur d'un système hydraulique d'un véhicule (1) de travail, le moyen (30) de retenue ayant une surface (32) de contact adaptée pour correspondre à la partie (20 ; 24a-d) mobile de connecteur, de manière à ce que ses connexions hydrauliques soient protégées et non exposées lorsqu'il est placé dans le moyen (30) de retenue, **caractérisé en ce que** le moyen (30) de retenue est monté fixe sur l'équipement (2) de travail, de manière à ce que ladite surface (32) de contact du moyen (30) de retenue soit accessible pour une connexion de protection de la partie (20 ; 24a-d) mobile de connecteur.

2. Equipement (2) de travail suivant la revendication 1, **caractérisé en ce qu'**il est conçu pour loger une partie (20 ; 24a-d) mobile de connecteur, que ce soit si la partie (20 ; 24a-d) mobile de connecteur est une partie (20) mobile de multi-couplage ou que ce soit si elle comprend une pluralité de couplages (24a-d) hydrauliques individuels.

3. Equipement (2) de travail suivant la revendication 2, **caractérisé par** des ouvertures (34a-d) ménagées sur la surface (32) de contact des moyens (30) de retenue, lesquelles ouvertures (34a-d) sont conçues pour loger des couplages (24a-d) hydrauliques individuels.

4. Equipement (2) de travail suivant la revendication 3, **caractérisé par** un faux (33) connecteur électrique agencé pour la fixation d'une connexion (25) électrique de l'équipement (2) de travail.

5. Equipement (2) de travail suivant l'une quelconque des revendications précédentes, **caractérisé par** un bord (31) circonférentiel définissant la bordure de la surface (32) de contact, dans lequel une partie (20) mobile de multi-couplage s'adapte étroitement à l'intérieur de ce bord (31).

6. Equipement (2) de travail suivant l'une quelconque des revendications précédentes, **caractérisé en ce qu'**il comprend en outre un couvercle (40), qui est conçu pour s'adapter en la protégeant :
- à la surface (32) de contact du moyen (30) de retenue, lorsque la partie (20, 24a-d) mobile de connecteur est connectée à la partie (10) fixe de connecteur ; et
- à la partie (10) fixe de connecteur, quand la partie (20, 24a-d) mobile de connecteur est déconnectée de la partie (10) fixe de connecteur et placée dans le moyen (30) de retenue.
